# EUROPÄISCHE PATENTANMELDUNG

(11) **EP 4 335 722 A1**
(43) Veröffentlichungstag der Anmeldung: **13.03.2024**
(21) Anmeldenummer: 22194870.6
(22) Anmeldetag: 09.09.2022
(51) Int. Cl.: B61L 15/00, B61L 27/00, H04L 9/40

(54) **FERNZUGRIFFSEINRICHTUNG UND VERFAHREN FÜR EINEN FERNZUGRIFF AUF EIN GESCHLOSSENES NETZWERK EINER EISENBAHNTECHNISCHEN ANLAGE**

(71) Anmelder: Siemens Mobility GmbH, 81739 München (DE)
(72) Erfinder: Reusch, Christian, 30455 Hannover (DE); Theuerkauf, Klaus, 39106 Magdeburg (DE)
(74) Vertreter: Siemens Patent Attorneys

(57) **Zusammenfassung**

Die Erfindung betrifft eine Fernzugriffseinrichtung (1) für ein geschlossenes Netzwerk (5) einer eisenbahntechnischen Anlage (2) mit wenigstens einem Gateway (6), das für einen externen Zugang zum geschlossenen Netzwerk (5) der eisenbahntechnischen Anlage (2) für berechtigte Benutzer (4) und/oder Geräte (3) ausgebildet ist.

Um einen sicheren Fernzugriff auf ein geschlossenes Netzwerk (5) einer eisenbahntechnischen Anlage (2) zu ermöglichen, ist erfindungsgemäß vorgesehen, dass die Fernzugriffseinrichtung (1) wenigstens eine mit dem Gateway (6) verbundene Authentifikationseinrichtung (7) aufweist, die zum Überprüfen einer Identität der berechtigten Benutzer (4) und/oder Geräte (3) ausgebildet ist, und das Gateway (6) ausgebildet ist, den Zugang zum geschlossenen Netzwerk (5) herzustellen, wenn ein für die abgeschlossene Überprüfung repräsentatives Freigabesignal der Authentifikationseinrichtung (7) empfangen wurde.

Die Erfindung betrifft auch ein Verfahren für einen Fernzugriff.

## Beschreibung

Die Erfindung betrifft eine Fernzugriffseinrichtung für ein geschlossenes Netzwerk einer eisenbahntechnischen Anlage, mit wenigstens einem Gateway, das für einen externen Zugang zum geschlossenen Netzwerk der eisenbahntechnischen Anlage für berechtigte Benutzer und/oder Geräte ausgebildet ist.

Ferner betrifft die Erfindung ein Verfahren für einen Fernzugriff auf ein geschlossenes Netzwerk einer eisenbahntechnischen Anlage, bei dem von einem Gateway ein externer Zugang zum geschlossenen Netzwerk der eisenbahntechnischen Anlage für berechtigte Benutzer und/oder Geräte hergestellt wird.

Eisenbahntechnische Anlagen und hierbei insbesondere die signaltechnischen Anlagen unterliegen einer hohen Sicherheit und damit besonderen Aufgaben, um einen ungewollten Zugriff von außen zu vermeiden. Hier spielt die sogenannte Cybersecurity eine große Rolle, die einen bösartigen Angriff auf die Signaltechnik der eisenbahntechnischen Anlage ausschließen soll. So wird beispielsweise größter Wert auf eine sichere Netzwerkarchitektur der signaltechnischen Systeme gelegt, die beispielsweise durch die Richtlinien für ein Kategorie 2-Netzwerk gemäß EN 50159 festgelegt sind. Hiernach ist das Netzwerk der eisenbahntechnischen Anlage von anderen externen Netzwerken separiert und mit hohem Aufwand gesichert, so dass das Risiko eines nicht autorisierten Zugriffs auf das Netzwerk der eisenbahntechnischen Anlage von extern als vernachlässigbar eingestuft werden kann.

Trotzdem kann es vorteilhaft sein, wenn ein sicherer Fernzugriff auf die eisenbahntechnische Anlage ermöglicht wird. Hierdurch kann beispielsweise ein Wartungsaufwand erheblich reduziert werden und mögliche Ausfallzeiten der eisenbahntechnischen Anlage und zusätzliche Kosten wie beispielsweise Reisekosten für einen Serviceeinsatz verhindert werden. Teilweise wird versucht, einen solchen Zugriff durch VPN-Tunneltechniken zu realisieren. Diese können jedoch einen bösartigen Zugriff nicht komplett ausschließen und haben somit Nachteile bzw. Risiken.

Es ist daher die Aufgabe der vorliegenden Erfindung, eine Fernzugriffseinrichtung und ein Verfahren der eingangs genannten Art bereitzustellen, die einen sicheren Zugriff auf das Netzwerk einer eisenbahntechnischen Anlage ermöglicht.

Erfindungsgemäß wird die Aufgabe gelöst durch eine Fernzugriffseinrichtung der eingangs genannten Art, bei der die Fernzugriffseinrichtung wenigstens eine mit dem Gateway verbundene Authentifikationseinrichtung aufweist, die zum Überprüfen einer Identität der berechtigten Benutzer und/oder Geräte ausgebildet ist, und das Gateway ausgebildet ist, den Zugang zum geschlossenen Netzwerk herzustellen, wenn ein für die abgeschlossene Überprüfung repräsentatives Freigabesignal der Authentifikationseinrichtung empfangen wurde

Weiterhin wird die Aufgabe erfindungsgemäß für das Verfahren der eingangs genannten Art dadurch gelöst, dass eine Identität der berechtigten Benutzer und/oder Geräte von wenigstens einer Authentifikationseinrichtung überprüft wird, und bei dem der Zugang zum Netzwerk von dem Gateway hergestellt wird, wenn ein für die abgeschlossene Überprüfung repräsentatives Freigabesignal der Authentifikationseinrichtung empfangen wurde.

Die erfindungsgemäße Lösung hat den Vorteil, dass nur berechtigte Benutzer und/oder Geräte Zugriff auf das geschlossene Netzwerk der eisenbahntechnischen Anlage erhalten und die Berechtigung der Benutzer und/oder Geräte durch die erfindungsgemäße Authentifikationseinrichtung überprüft wird. Hierdurch ist sichergestellt, dass wirklich nur berechtigte Benutzer und/oder Geräte Zugriff auf das geschlossene Netzwerk erhalten. Das erfindungsgemäße Gateway stellt hier einen Zugang zum geschlossenen Netzwerk dar und kann beispielsweise als eine Firewall ausgebildet sein. Bei einem Zugriffsversuch von einem Benutzer und/oder Gerät auf das Gateway, wird dieser automatisch an die Authentifikationseinrichtung weitergeleitet, die anschließend die Identität des Benutzers und/oder Gerätes überprüft. Die Überprüfung des Benutzers bzw. Geräts wird also nicht vom Gateway selbst, sondern von der verbundenen Authentifikationseinrichtung übernommen. Anschließend stellt das Gateway den gewünschten Zugang zum geschlossenen Netzwerk der eisenbahntechnischen Anlage nur her, wenn die Überprüfung durch die Authentifikation abgeschlossen und von dieser ein repräsentatives Freigabesignal an das Gateway gesendet und von diesem empfangen wurde. Das Freigabesignal ist repräsentativ für die positive Überprüfung des Benutzers bzw. des Gerätes, d. h. dass deren Zugriffsberechtigung vorliegt. Da das Gateway die Überprüfung nicht selbst vornehmen muss, kann dieses einfacher ausgestaltet und ggfs. eine übliche Firewall dazu verwendet werden.

Bei der Überprüfung eines Benutzers durch die Authentifikationseinrichtung wird dieser beispielsweise durch die Eingabe eines Benutzernamens und eines Passwortes verifiziert. Weitere Eingabe wie die einer vorbestimmten Emailadresse oder ähnliches sind selbstverständlich möglich. Bei der Überprüfung eines Gerätes kann dieses beispielsweise durch einen im Gerät vorhandenen Sicherheitstoken identifiziert werden. Ein Sicherheitstoken ist eine Hardware- und/oder Softwarekomponente zur Identifizierung und Authentifizierung.

Die erfindungsgemäße Lösung kann durch vorteilhafte Ausgestaltungen weiterentwickelt werden, die im Folgenden beschrieben sind.

So kann die Authentifikationseinrichtung zum Registrieren eines neuen Benutzers und/oder Gerätes ausgebildet sein und die Fernzugriffseinrichtung wenigstens eine mit der Authentifikationseinrichtung verbundene Freigabeeinrichtung aufweisen, wobei die Registrierung des neuen Benutzers und/oder Gerätes von der Authentifikationseinrichtung nur abgeschlossen wird, wenn ein Freigabesignal der Freigabeeinrichtung empfangen wurde, nachdem Informationen zu dem neuen Benutzer und/oder Gerät an die Freigabeeinrichtung übermittelt wurden. Dies hat den Vorteil, dass neue Benutzer und/oder Geräte auch im Nachhinein registriert werden können, auch wenn diese bei der Einrichtung der Fernzugriffseinrichtung noch nicht vorgesehen waren. Durch die Freigabeeinrichtung ist eine ausreichende Sicherheit gegeben, weil eine individuelle Freigabe für neue Benutzer und/oder Geräte erfolgen muss. Die Freigabeeinrichtung kann beispielsweise von dem Betreiber der eisenbahntechnischen Anlage verwaltet werden, so dass nur dieser den Zugriff auf das geschlossene Netzwerk seiner eisenbahntechnischen Anlage gewähren kann. Die Freigabeeinrichtung kann dabei beispielsweise innerhalb des Netzwerks der eisenbahntechnischen Anlage angeordnet sein. Dadurch ist eine einfache Handhabung für den Betreiber und eine besonders hohe Sicherheit gewährleistet.

Um eine einfache Handhabung und hohe Benutzerfreundlichkeit zu gewährleisten, kann die Authentifikationseinrichtung wenigstens eine Webschnittstelle aufweisen, die für die Überprüfung und/oder Registrierung der Benutzer und/oder Geräte ausgebildet ist. Solche Webschnittstellen sind leicht über einen beliebigen Internetbrowser abrufbar und damit einfach zu handhaben.

In einer weiteren vorteilhaften Ausgestaltung kann die Fernzugriffseinrichtung wenigstens eine Umwandlungseinrichtung aufweisen, die zum Umwandeln von externen Netzwerkdaten in Bilddaten innerhalb des geschlossenen Netzwerks und umgekehrt ausgebildet ist. Dies hat den Vorteil, dass hierdurch eine extrem hohe Sicherheit des geschlossenen Netzwerks der eisenbahntechnischen Anlage gewährleistet werden kann, weil die Umwandlungseinrichtung einen rückwirkungsfreien Zugriff ermöglicht. Die Umwandlungseinrichtung stellt einen Protokollbruch dar, weil sie Bilddaten in externe Netzwerkdaten übersetzt und damit kein direkter Zugriff möglich ist.

Um den Fernzugriff auch im Nachhinein vollständig nachvollziehbar zu gestalten und damit eine Auditierungsmöglichkeit zu schaffen, kann die Fernzugriffseinrichtung wenigstens eine Überwachungs- und Aufzeichnungseinrichtung aufweisen, die zum Überwachen und zumindest teilweisen Aufzeichnen von über das Gateway ausgetauschten Daten ausgebildet ist. Die Überwachungs- und Aufzeichnungseinrichtung kann entweder sämtliche über den Fernzugriff erfolgte Bedienhandlungen aufzeichnen oder die Aufzeichnung nur temporär starten, wenn bestimmte Kriterien erfüllt sind. Hierbei wird beispielsweise das Bildsignal in einer HDMI-Leitung in das Signal einer IP-Kamera umgewandelt, das abgespeichert werden kann. Hierdurch ist eine vollständige Überwachung des Fernzugriffs möglich, der auch bei den Benutzern eine erhöhte Aufmerksamkeit bei ihren Bedienhandlungen zur Folge hat.

In einer vorteilhaften Ausgestaltung kann die Überwachungs- und Aufzeichnungseinrichtung mit der Authentifikationseinrichtung verbunden sein und die Authentifikationseinrichtung zum Speichern der aufgezeichneten Daten ausgebildet sein. So werden in der Authentifikationseinrichtung sämtliche Daten zum Fernzugriff zentral abgelegt.

Die Erfindung betrifft weiterhin eine eisenbahntechnische Anlage mit wenigstens einem geschlossenen Netzwerk, die erfindungsgemäß wenigstens eine Fernzugriffseinrichtung für das geschlossene Netzwerk nach einer der oben beschriebenen Ausführungsformen aufweist.

In einer vorteilhaften Ausgestaltung des erfindungsgemäßen Verfahrens können neue Benutzer und/oder Geräte von der Authentifikationseinrichtung registriert werden und die Registrierung des neuen Benutzers und/oder Gerätes von der Authentifikationseinrichtung nur abgeschlossen werden, wenn ein Freigabesignal der Freigabeeinrichtung empfangen wurde, nachdem Informationen zu dem neuen Benutzer und/oder Gerät an die Freigabeeinrichtung übermittelt wurden. Dies hat den oben bereits beschrieben Vorteil, dass neue Benutzer und/oder Geräte auch nach der Einrichtung der Fernzugriffseinrichtung registriert werden können.

Ferner können externe Netzwerkdaten in Bilddaten und umgekehrt von einer Umwandlungseinrichtung umgewandelt werden. Dies hat den ebenfalls oben bereits beschriebenen Vorteil, dass der Fernzugriff rückwirkungsfrei für das geschlossene Netzwerk der eisenbahntechnischen Anlage ausgeführt ist.

Um die oben bereits beschriebene Auditierungsmöglichkeit zu schaffen, können über das Gateway ausgetauschte Daten überwacht und zumindest teilweise aufgezeichnet werden.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Im Folgenden wird die Erfindung mit Bezug auf die beigefügten Zeichnungen erläutert. Es zeigen:
- Figur 1: eine schematische Darstellung einer beispielhaften Ausführungsform einer erfindungsgemäßen Fernzugriffseinrichtung;
- Figur 2: eine schematische Darstellung einer weiteren beispielhaften Ausführungsform einer erfindungsgemäßen Fernzugriffseinrichtung.

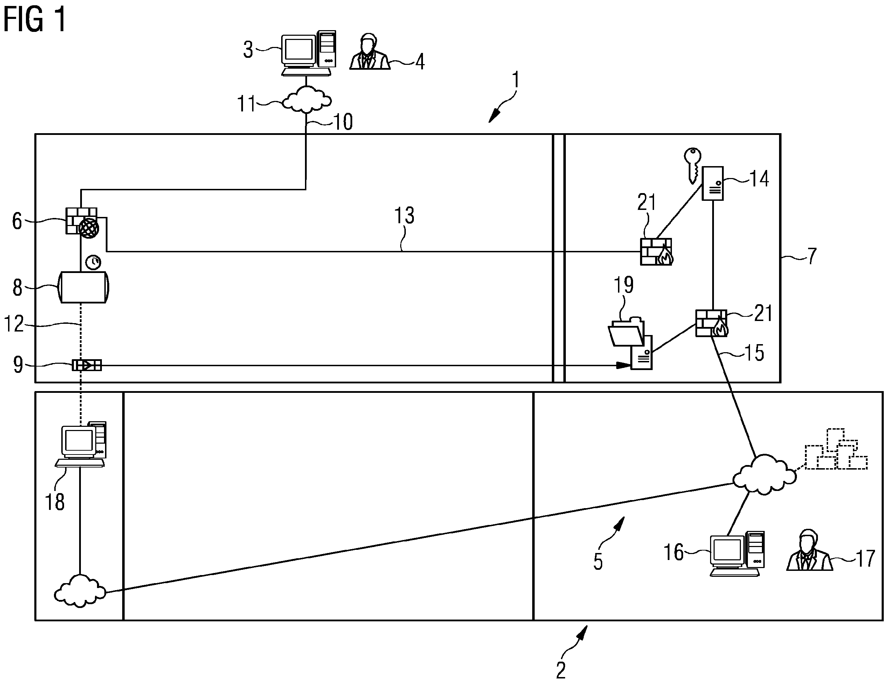

Zunächst wird die Erfindung mit Bezug auf die beispielhafte Ausführungsform in Figur 1 beschrieben.

Figur 1 zeigt eine erfindungsgemäße Fernzugriffseinrichtung 1 in einer beispielhaften Ausführungsform, eine eisenbahntechnische Anlage 2 und den Computer 3 eines Benutzers 4.

Die eisenbahntechnische Anlage 2 umfasst beispielsweise eine U-Bahn, Straßenbahn, Fernbahn, einen Güterzug, also verschiedenste Schienenfahrzeuge zusammen mit einem Streckennetz und einer Signalanlage, die für eine Fahrzeug- bzw. Zugsteuerung verantwortlich ist. Wie bei allen modernen eisenbahntechnischen Anlagen üblich, umfasst auch die eisenbahntechnische Anlage 2 in Figur 1 ein Netzwerk 5, in dem Daten zwischen verschiedenen Komponenten ausgetauscht werden. Dies kann ein geschlossenes Computernetzwerk sein, beispielsweise per Ethernet, das in üblicher Weise ausgeführt ist.

Um die Sicherheit der eisenbahntechnischen Anlage zu gewährleisten, ist das Netzwerk 5 innerhalb der eisenbahntechnischen Anlage 2 als ein geschlossenes Netzwerk ausgebildet. Es ist beispielsweise als ein Kategorie 2-Netzwerk gemäß EN 50159 angelegt, so dass besondere Anforderungen bezüglich der Abgeschlossenheit gelten. Ein einfacher direkter Zugang zu dem Netzwerk 5 der eisenbahntechnischen Anlage 2 von außen ist bei der beispielhaften Ausführungsform in Figur 1 aus Sicherheitsgründen nicht erwünscht.

Ein solcher Fernzugriff oder Remotezugriff des Benutzers 4 mittels seines Computers 3 ist aber mithilfe der erfindungsgemäßen Fernzugriffseinrichtung 1 und unter Einhaltung der Kriterien für das Kategorie 2-Netzwerk dennoch möglich, wie im Folgenden beschrieben ist.

Der Einfachheit halber ist von der eisenbahntechnischen Anlage 2 in den Figuren lediglich deren geschlossenes Netzwerk 5 dargestellt.

Die erfindungsgemäße Fernzugriffseinrichtung 1 umfasst in der beispielhaften Ausführungsform in Figur 1 ein Gateway 6, eine Authentifikationseinrichtung 7, eine Umwandlungseinrichtung 8 und eine Überwachungs- und Aufzeichnungseinrichtung 9.

Die Fernzugriffseinrichtung 1 ist auf der einen Seite über eine Netzwerkverbindung 10 mit dem Computer 3 des Benutzers 4 verbunden. Die Netzwerkverbindung 10 ist Teil eines externen Netzwerks (nicht dargestellt), das extern zum geschlossenen Netzwerk 5 der eisenbahntechnischen Anlage 2 ausgebildet ist. Der Computer 3 ist ein handelsüblicher Computer wie beispielsweise ein Laptop, mit dem die Netzwerkverbindung 10 möglich ist. Die Netzwerkverbindung 10 kann kabelgebunden, wie beispielsweise über Ethernet, oder auch teilweise kabellos über Mobilfunk oder das Internet 11, wie in der beispielhaften Ausführungsform in Figur 1, erfolgen.

Auf der anderen Seite ist die Fernzugriffseinrichtung 1 über eine gestrichelt dargestellte Signalleitung 12, beispielsweise in Form einer HDMI-Leitung mit dem Netzwerk 5 der eisenbahntechnischen Anlage 1 verbunden.

Das Gateway 6 ist für einen externen Zugang zum geschlossenen Netzwerk 5 der eisenbahntechnischen Anlage 2 für berechtigte Benutzer 4 und/oder Geräte ausgebildet. Bei der beispielhaften Ausführungsform in Figur 1 ist das Gateway 6 beispielsweise als eine Firewall ausgebildet, die nur berechtigten Benutzern und/oder Geräten ein Durchkommen ermöglicht.

Mit dem Gateway 6 verbunden ist die Authentifikationseinrichtung 7, die für eine Überprüfung der berechtigten Benutzer und/oder Geräte ausgebildet ist. Nur wenn die Authentifikationseinrichtung 7 nach erfolgter Überprüfung ein Freigabesignal über die Verbindungsleitung 13 an das Gateway 6 sendet, schaltet das Gateway 6 den Zugang in Richtung des geschlossenen Netzwerks 5 frei. Die Authentifikationseinrichtung 7 umfasst eine Webschnittstelle 14, über die die Überprüfung des Benutzers 4 erfolgt. Sobald der Zugriffsversuch des Benutzers 4 über den Computer 3 erfolgt, wird der Benutzer 4 an die Webschnittstelle 14 der Authentifikationseinrichtung 7 weitergeleitet. Im Detail bedeutet dies, dass eine entsprechende Internetseite aufgerufen wird, über die der Benutzer 4 beispielsweise seinen Benutzernamen und sein Passwort zur Identifikation angibt. Bei der Überprüfung eines berechtigten Geräts kann ggf. auf die Webschnittstelle 14 verzichtet werden, weil sich ein berechtigtes Gerät beispielsweise über einen Sicherheitstoken identifizieren kann, der auf dem Gerät abgespeichert ist. Hierfür ist die Webschnittstelle 14 nicht nötig.

Sobald die Identifikation des Benutzers 4 und/oder des Geräts erfolgt ist und die Authentifikationseinrichtung 7 den Benutzer 4 und/oder das Gerät als berechtigten Benutzer identifiziert hat, sendet die Authentifikationseinrichtung 7 das Freigabesignal an das Gateway 6. Anschließend gibt das Gateway 6 den Zugang in Richtung des Netzwerks 5 frei. Diese Freigabe bedeutet, dass das Gateway 6 den Computer 3 mit der Umwandlungseinrichtung 8 verbindet.

Die Umwandlungseinrichtung 8 ist zum Umwandeln von Daten der externen Netzwerkverbindung 10 in Bilddaten oder Gerätedaten des geschlossenen Netzwerks 5 und umgekehrt ausgebildet. Somit wandelt die Umwandlungseinrichtung 8 wie Bildsignale, also die Daten einer Bildsignalverbindung mit dem Netzwerk 5, in Daten um, die in die Netzwerkverbindung eingespeist werden können. Hierfür kann die Umwandlungseinrichtung 8 in Richtung der Netzwerkverbindung 10 einen nicht dargestellten Netzwerkadapter und in Richtung des geschlossenen Netzwerks 5 einen Bildsignaladapter (nicht dargestellt) aufweisen. Diese Umwandlung der Datenformate in der Umwandlungseinrichtung 8 wird beispielsweise durch einen Mikroprozessor durchgeführt, der in der Umwandlungseinrichtung 8 angeordnet ist. Dabei werden die Bildsignale aus dem geschlossenen Netzwerk 5 analysiert und anschließend in Daten eines Datenformats des externen Netzwerks der Netzwerkverbindung 10 umgewandelt. Man könnte hier auch von einem Übersetzen sprechen. Das Umwandeln ist nötig, weil das Datenformat der Bildsignalverbindung in der Signalleitung 12 unterschiedlich ist zum Datenformat in der Netzwerkverbindung 10. In dieser Umwandlung der Datenformate besteht ein Protokollbruch, der die gewünschte hohe Sicherheit für die eisenbahntechnische Anlage 2 gewährleistet.

Nach der Umwandlung der Datenformate durch die Umwandlungseinrichtung 8 können die Bildinformationen aus dem geschlossenen Netzwerk 5 über die Netzwerkverbindung 10 zum Computer 3 übermittelt werden und dort angezeigt werden. So bekommt der Benutzer 4 auf seinem Computer 3, insbesondere auf seinem Monitor des Computers 3, Bildinformationen angezeigt, die ansonsten nur auf Anzeigeeinrichtungen innerhalb des Netzwerks 5 der eisenbahntechnischen Anlage 2 zu sehen sind.

Neben der Umwandlung von Bildsignalen kann die Umwandlungseinrichtung 8 auch zum Umwandeln von Gerätesignalen ausgebildet sein. Diese Gerätesignale werden in üblicher Weise auf dem Computer 3 durch den Benutzer 4 erzeugt, beispielsweise in Form von Eingaben in die Tastatur oder von Mausbewegungen oder ähnliches. Auch diese Gerätesignale werden über die Netzwerkverbindung 10 zur Umwandlungseinrichtung 8 geleitet. In der Umwandlungseinrichtung 8 werden diese Gerätesignale analysiert und von der Umwandlungseinrichtung 8 in das entsprechende Datenformat für einen nicht dargestellten Gerätesignaladapter innerhalb der Umwandlungseinrichtung 8 umgewandelt. Auch hier findet erneut ein Protokollbruch statt, so dass keine direkte Verbindung zum geschlossenen Netzwerk 5 besteht. Für die Übermittlung der Gerätesignale kann die Signalleitung 12 alternativ oder zusätzlich für die Gerätesignale ausgebildet sein, z.B. als ein USB-Kabel.

Die Authentifikationseinrichtung 7 ist bei der beispielhaften Ausführungsform in Figur 1 auch zum Registrieren von neuen Benutzern und/oder Geräten ausgebildet, so dass auch neue Benutzer oder Benutzergruppen und Geräte registriert werden können.

Hierzu hat ein nicht registrierter Benutzer die Möglichkeit, über die Webschnittstelle 14 sich und/oder ein Gerät neu zu registrieren. Hierfür muss der Benutzer beispielsweise einen Benutzernamen, ein Passwort, seinen Namen und seine Emailadresse angeben. Für eine Geräteregistrierung gibt er beispielsweise einen Sicherheitstoken des Geräts an. Anschließend erhält der Benutzer beispielsweise eine Verifizierungsemail, mithilfe der er sich durch Aufrufen eines Links verifizieren muss. Die Authentifikationseinrichtung 7 umfasst auch eine Verbindung 15 zu einer Freigabeeinrichtung 16. Die Freigabeeinrichtung 16 ist bei der beispielhaften Ausführungsform in Figur 1 beispielsweise innerhalb des geschlossenen Netzwerks 5 der eisenbahntechnischen Anlage 2 angeordnet.

Die Freigabeeinrichtung 16 dient zur Bestätigung eines neu registrierten Benutzers 4 und/oder Gerätes 3 durch einen Prüfer 17. Nur wenn der Prüfer 17 an der Freigabeeinrichtung 16 eine Freigabehandlung vornimmt, erhält die Authentifikationseinrichtung 7 über die Verbindung 15 ein Freigabesignal, mit dem die Registrierung des neuen Benutzers und/oder Gerätes abgeschlossen wird. Der Prüfer 17 kann beispielsweise ein Mitarbeiter des Betreibers der eisenbahntechnischen Anlage 2 sein, der eine entsprechende Legitimation zum Freigeben von neuen Benutzern und/oder Geräten für den Fernzugriff auf die eisenbahntechnische Anlage 2 hat. Der Fernzugriff über die erfindungsgemäße Fernzugriffseinrichtung 1 kann zeitlich begrenzt sein und beispielsweise lediglich für zwei Stunden gelten. Die Registrierung der Benutzer und Geräte kann von dem Prüfer 17 über die Freigabeeinrichtung 16 auch wieder deaktiviert werden, wenn der Fernzugriff nicht mehr gewünscht ist.

Die Fernzugriffseinrichtung 1 ist über die Signalleitung 12 mit einem internen Computer 18 innerhalb des geschlossenen Netzwerks 5 verbunden. Die Überwachungs- und Aufzeichnungseinrichtung 9 ist an der Signalleitung 12 angeordnet und zum Überwachen und Aufzeichnen von den über die Signalleitung 12 ausgetauschten Daten ausgebildet. Die Überwachungs- und Aufzeichnungseinrichtung 9 kann entweder den gesamten Datenaustausch aufzeichnen, der über die Signalleitung 12 stattfindet. Die aufgezeichneten Daten werden bei der Ausführungsform in Fig. 1 innerhalb der Authentifikationseinrichtung 7 in einem Speicher 19 abgelegt. Die Überwachungs- und Aufzeichnungseinrichtung 9 kann alternativ auch die über die Signalleitung 12 ausgeführten Handlungen überwachen und nur bei vorbestimmten Ereignissen eine Aufzeichnung starten. Die von der Überwachungs- und Aufzeichnungseinrichtung 9 aufgezeichneten Daten können beispielsweise in Form von Screenshots abgespeichert werden. Die Überwachungs- und Aufzeichnungseinrichtung 9 stellt im Wesentlichen eine simulierte IP-Kamera dar, die die Signalleitung 12 überwacht. Die Überwachungs- und Aufzeichnungseinrichtung 9 kann beispielsweise bestimmte über den Fernzugriff erzeugte Mausbewegungen erkennen und gegebenenfalls auch Alarme für bestimmte erkannte Handlungen erzeugen, die beispielsweise an den Prüfer 17 weitergegeben werden können. Die Alarme können selbstverständlich auch an weitere übergeordnete Schnittstellen weitergegeben werden, wie beispielsweise eine Diagnoseschnittstelle. Selbstverständlich können auch entsprechende Alarmemails ausgelöst werden.

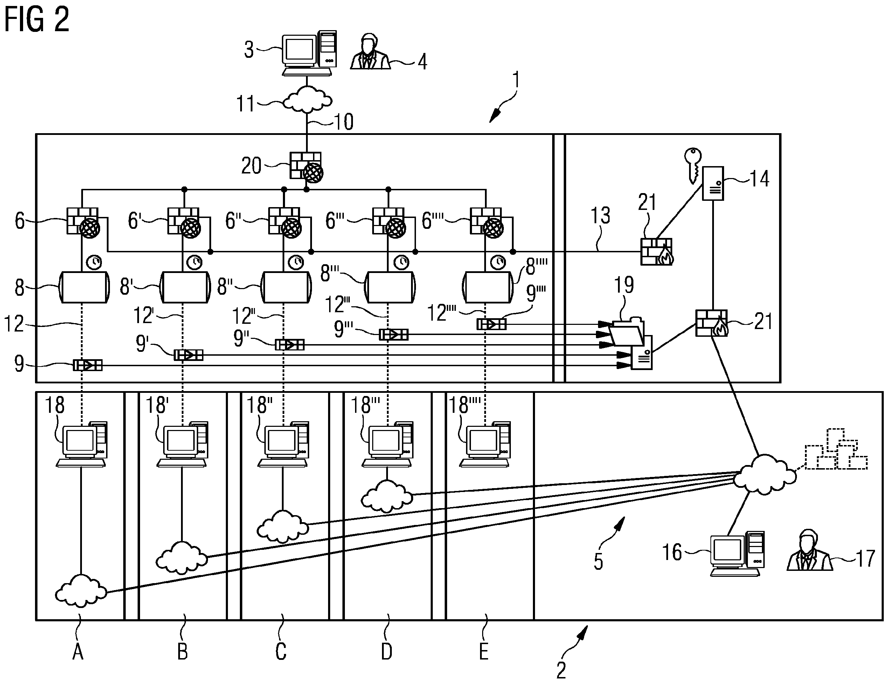

Im Folgenden wird die weitere beispielhafte Ausführungsform der erfindungsgemäßen Fernzugriffseinrichtung 1 mit Bezug auf die Ausführungsform in Figur 2 beschrieben.

Der Einfachheit halber wird lediglich auf die Unterschiede zur Ausführungsform in Figur 1 eingegangen. Gleiche Bezugszeichen bezeichnen gleiche Teile.

Bei der Ausführungsform in Figur 2 umfasst das geschlossene Netzwerk 5 der eisenbahntechnischen Anlage 2 mehrere Systeme A, B, C, D, E, die beispielsweise verschiedene Anlageteile oder Komponentengruppen der eisenbahntechnischen Anlage 2 repräsentieren. Solche Komponentengruppen können beispielsweise Bahnübergänge, Achszähler, Weichenantriebe oder ähnliches sein. Jedes dieser Systeme A, B, C, D, E weist einen internen Computer 18, 18'-18ʺʺ auf, auf dem der Fernzugriff erfolgen soll.

Entsprechend weist auch die erfindungsgemäße Fernzugriffseinrichtung 1 in der beispielhaften Ausführungsform in Figur 2 mehrere Kaskaden von Gateways 6, 6'-6ʺʺ, Umwandlungseinrichtungen 8, 8'-8ʺʺ, Überwachungs- und Aufzeichnungseinrichtungen 9, 9'-9ʺʺ und Signalleitungen 12, 12'-12ʺʺ auf. Diese Kaskaden sind über einen zentralen Router 20 verbunden, der die Benutzeranfragen von der externen Netzwerkverbindung 10 entsprechend weiterleitet. Dadurch können unterschiedliche Benutzergruppen den unterschiedlichen Systemen A-E zugeordnet werden. Im Einzelnen sind die Komponenten aber gleich wie bei der Ausführungsform in Figur 1 beschrieben ausgebildet.

## Patentansprüche

1. Fernzugriffseinrichtung (1) für ein geschlossenes Netzwerk (5) einer eisenbahntechnischen Anlage (2),
mit wenigstens einem Gateway (6), das für einen externen Zugang zum geschlossenen Netzwerk (5) der eisenbahntechnischen Anlage (2) für berechtigte Benutzer (4) und/oder Geräte (3) ausgebildet ist,
**dadurch gekennzeichnet, dass** die Fernzugriffseinrichtung (1) wenigstens eine mit dem Gateway (6) verbundene Authentifikationseinrichtung (7) aufweist, die zum Überprüfen einer Identität der berechtigten Benutzer (4) und/oder Geräte (3) ausgebildet ist, und
das Gateway (6) ausgebildet ist, den Zugang zum geschlossenen Netzwerk (5) herzustellen, wenn ein für die abgeschlossene Überprüfung repräsentatives Freigabesignal der Authentifikationseinrichtung (7) empfangen wurde.

2. Fernzugriffseinrichtung (1) nach Anspruch 1,
**dadurch gekennzeichnet, dass**
die Authentifikationseinrichtung (7) zum Registrieren eines neuen Benutzers (4) und/oder Gerätes (3) ausgebildet ist und die Fernzugriffseinrichtung (1) wenigstens eine mit der Authentifikationseinrichtung (7) verbundene Freigabeeinrichtung (16) aufweist, wobei die Registrierung des neuen Benutzers (4) und/oder Gerätes (3) von der Authentifikationseinrichtung nur abgeschlossen wird, wenn ein Freigabesignal der Freigabeeinrichtung (16) empfangen wurde, nachdem Informationen zu dem neuen Benutzer (4) und/oder Gerät (3) an die Freigabeeinrichtung (16) übermittelt wurden.

3. Fernzugriffseinrichtung (1) nach Anspruch 2,
**dadurch gekennzeichnet, dass**
die Freigabeeinrichtung (16) innerhalb des geschlossenen Netzwerks (5) der eisenbahntechnischen Anlage (2) angeordnet ist.

4. Fernzugriffseinrichtung (1) nach einem der oben genannten Ansprüche,
**dadurch gekennzeichnet, dass**
die Authentifikationseinrichtung (7) wenigstens eine Webschnittstelle (14) aufweist, die für die Überprüfung und/oder Registrierung der Benutzer (4) und/oder Geräte (3) ausgebildet ist.

5. Fernzugriffseinrichtung (1) nach einem der oben genannten Ansprüche,
**dadurch gekennzeichnet, dass**
die Fernzugriffseinrichtung (1) wenigstens eine Umwandlungseinrichtung (8) aufweist, die zum Umwandeln von externen Netzwerkdaten in Bilddaten innerhalb des geschlossenen Netzwerks (5) und umgekehrt ausgebildet ist.

6. Fernzugriffseinrichtung (1) nach einem der oben genannten Ansprüche,
**dadurch gekennzeichnet, dass**
die Fernzugriffseinrichtung (1) wenigstens eine Überwachungs- und Aufzeichnungseinrichtung (9) aufweist, die zum Überwachen und zumindest teilweisen Aufzeichnen von über das Gateway (6) ausgetauschten Daten ausgebildet ist.

7. Fernzugriffseinrichtung (1) nach Anspruch 6,
**dadurch gekennzeichnet, dass**
die Überwachungs- und Aufzeichnungseinrichtung (9) mit der Authentifikationseinrichtung (7) verbunden ist und die Authentifikationseinrichtung (7) zum Speichern der aufgezeichneten Daten ausgebildet ist.

8. Eisenbahntechnische Anlage (2),
mit wenigstens einem geschlossenen Netzwerk,
**dadurch gekennzeichnet, dass** die eisenbahntechnische Anlage (2) wenigstens eine Fernzugriffseinrichtung (1) für das geschlossene Netzwerk (5) nach einem der oben genannten Ansprüche aufweist.

9. Verfahren für einen Fernzugriff auf ein geschlossenes Netzwerk (5) einer eisenbahntechnischen Anlage (2),
bei dem von einem Gateway (6) ein externer Zugang zum geschlossenen Netzwerk (5) der eisenbahntechnischen Anlage (2) für berechtigte Benutzer 4) und/oder Geräte (3) hergestellt wird,
**dadurch gekennzeichnet, dass** eine Identität der berechtigten Benutzer (4) und/oder Geräte (3) von wenigstens einer Authentifikationseinrichtung (7) überprüft wird, und
bei dem der Zugang zum Netzwerk (5) von dem Gateway (6) hergestellt wird, wenn ein für die abgeschlossene Überprüfung repräsentatives Freigabesignal der Authentifikationseinrichtung (7) empfangen wurde.

10. Verfahren nach Anspruch 9,
**dadurch gekennzeichnet, dass**
neue Benutzer (4) und/oder Geräte (3) von der Authentifikationseinrichtung (7) registriert werden und die Registrierung des neuen Benutzers (4) und/oder Gerätes (3) von der Authentifikationseinrichtung (7) nur abgeschlossen wird, wenn ein Freigabesignal der Freigabeeinrichtung (16) empfangen wurde, nachdem Informationen zu dem neuen Benutzer (4) und/oder Gerät (3) an die Freigabeeinrichtung (16) übermittelt wurden.

11. Verfahren nach Anspruch 9 oder 10,
**dadurch gekennzeichnet, dass** externe Netzwerkdaten in Bilddaten und umgekehrt von einer Umwandlungseinrichtung (8) umgewandelt werden.

12. Verfahren nach einem der oben genannten Ansprüche 9 bis 11,
**dadurch gekennzeichnet, dass**
über das Gateway (6) ausgetauschte Daten überwacht und zumindest teilweisen aufgezeichnet werden.

13. Computerprogrammprodukt mit Programmbefehlen zur Durchführung des Verfahrens nach einem der Ansprüche 9 bis 12.

14. Bereitstellungsvorrichtung für das Computerprogrammprodukt nach Anspruch 13, wobei die Bereitstellungsvorrichtung das Computerprogrammprodukt speichert und/oder bereitstellt.
